# EUROPEAN PATENT SPECIFICATION

(11) **EP 0 593 429 B1**
(45) Date of publication and mention of the grant of the patent: **14.06.1995**
(21) Application number: 90912086.7
(22) Date of filing: 25.07.1990
(51) Int. Cl.: B29C 51/16, B27N 7/00, B30B 15/06

(54) **APPARATUS FOR COVERING A SURFACE AND THE EDGES OF A PANEL OF WOODEN OR LIKE MATERIAL WITH A SHEET OF THERMODEFORMABLE MATERIAL**
APPARAT ZUM BESCHICHTEN DER OBERFLÄCHE UND DER SEITENKANTEN EINER PLATTE AUS HOLZ ODER ÄHNLICHEM MATERIAL MIT EINER WÄRMEVERFORMBAREN FOLIE
APPAREIL SERVANT A RECOUVRIR UNE SURFACE ET LES BORDS D'UN PANNEAU EN BOIS OU EN MATERIAU SIMILAIRE AVEC UNE FEUILLE EN MATERIAU THERMODEFORMABLE

(30) Priority: 07.08.1989 IT 8414989
(43) Date of publication of application: 27.04.1994
(73) Proprietor: 3B S.p.A., I-31040 Salgareda Treviso (IT)
(72) Inventor: BERGAMO, Luciano, I-31040 Salgareda (Treviso) (IT)
(74) Representative: Piovesana, Paolo
(86) International application number: EP9001219
(87) International publication number: WO9101873

(56) References cited:
- EP-A- 0 262 748
- WO-A-88/00880
- BE-A- 627 422
- DE-A- 2 006 781
- DE-A- 2 601 118
- DE-A- 3 304 627
- FR-A- 2 482 558
- US-A- 4 695 047

## Description

This invention relates to an apparatus for covering a surface and the edges of a panel of wooden or like material with a sheet of thermodeformable material.

Wooden, chipboard, MDF and similar panels covered with a plastic laminate sheet are known. They are generally used for constructing furniture and in particular kitchen furniture, in which the exposed surfaces must possess definite aesthetic characteristics combined with resistance to rubbing and to attack by fatty and/or acid vapours. Such panels, which can have their exposed surface smooth or comprising ribs (grooves) even of a certain height (depth) are produced by applying a sheet of thermodeformable plastic material to this surface. The covering operation is completed by applying a further sheet to the opposite surface and strips of plastic covering material along the perimetral edges.

A drawback of these panels is that the joint between the panel surface and edges presents a certain inevitable discontinuity which results both in a ugly separtion line and an incomplete covering and lack of protection of the underlying wooden substrate from the fatty and/or acid vapours normally present in the environments within which the panel is used.

To obviate this drawback it has already been proposed to use a single thermodeformable plastic laminate sheet to simultaneously cover one surface and the edges of the wooden panel. the covering operation uses a press having a rigid surface and a heated surface of elastically yieldable material. The two surfaces can be moved relative to each other so as to press one against the other.

During use, the panel to be covered plus the covering sheet treated with adhesive are placed between the two surfaces. The heat causes softening of said sheet and the pressure causes it to adhere to the flat surface and to the edges of the panel, to create covering continuity between the exposed surface and the edges.

The particular nature of the operations involved ususally require certain precautions to be adopted, these consisting essentially of:
- making sure that the panel is not kept adhering to the rigid surface of the press, but is instead kept separated from it by a spacer consisting essentially of a panel of slightly smaller dimensions than those of the panel to be covered, in order to allow complete and correct adhesion of the plastic material to the panel edges, which would otherwise be only partial if the panel rested on said surface;
- keeping the plastic sheet softened at the four corners of the panel to be covered during the pressing stage, in order to allow it to stretch during pressing instead of just being dragged, which would inevitably cause the laminate to crinkle at the panel corners. In practice this operation is effected by positioning four angular retainers at a short distance in front of the panel vertices to press the softened plastic sheet against the yieldable surface of the press and prevent it being dragged in a tangential direction.

This covering operation is not normally carried out on single panels at time, which would result in very high costs, but instead is carried out on a plurality of panels simultaneously.

For this purpose a so-called "membrane" press is used (see EP-A-0 262 748), comprising a lower fixed platen and an upper mobile bed consisting of a plastics membrane.

To use this known type of press, at each pressing cycle a deformable plastics sheet of dimensions compatible with the dimensions of the membrane is firstly placed on the panels supported by spacers in a number and arrangement compatible together with the angular retainers in a position close to the panel vertices.

Finally a frame is placed on the sheet so that the spacer edges are slightly to the inside of those of the panel.

On operating the press all panels located on it are simultaneously covered, and remain joined together by the fact that the cover sheet is in one piece, they then being removed by a single operation of the press, and fed to the separation and finishing operations.

This covering operation effected simultaneously on several panels has enabled the production rate to be considerably increased, while at the same time using the available equipment more intensely, however certain operational limits have appeared which it is the purpose of this invention to eliminate.

One drawback of this known system is that the positioning of the laminate sheet on the panels, the positioning of the frame and retainers on the sheet and the centering of the frame on the panels must be done manually, resulting in considerable operational slowness and inaccuracy, which can mean a large number of production rejects.

An object of the invention is to obviate this drawback by sustantially increasing the production of panels covered simultaneously on their exposed surface and their four edges.

A further object of the invention is to substantially reduce the personnel required for manually positioning the various elements required for the production cycle within the press.

A further object of the invention is to obtain high quality production, so substantially reducing rejects.

These and further objects which will be more apparent hereinafter are attained according to the invention by an apparatus for covering a surface and the edges of panels of wooden material with a sheet of thermodeformable plastic material as described in claim 1.

Further embodiments of the invention are defined in the features of the dependent claims.

A preferred embodiment of the present invention is described in detail hereinafter with reference to the accompaying drawings in which:
- Figure 1: is a schematic plan view of a membrane press provided with the apparatus of the invention;
- Figure 2: is an enlarged cross-section therethrough on the line II-II of Figure 1 with the press in its open state;
- Figure 3: is an enlarged side view thereof on the line III-III of Figure 1;
- Figure 4: is an enlarged detailed vertical sectional view showing the holes provided in the magnetizable plate;

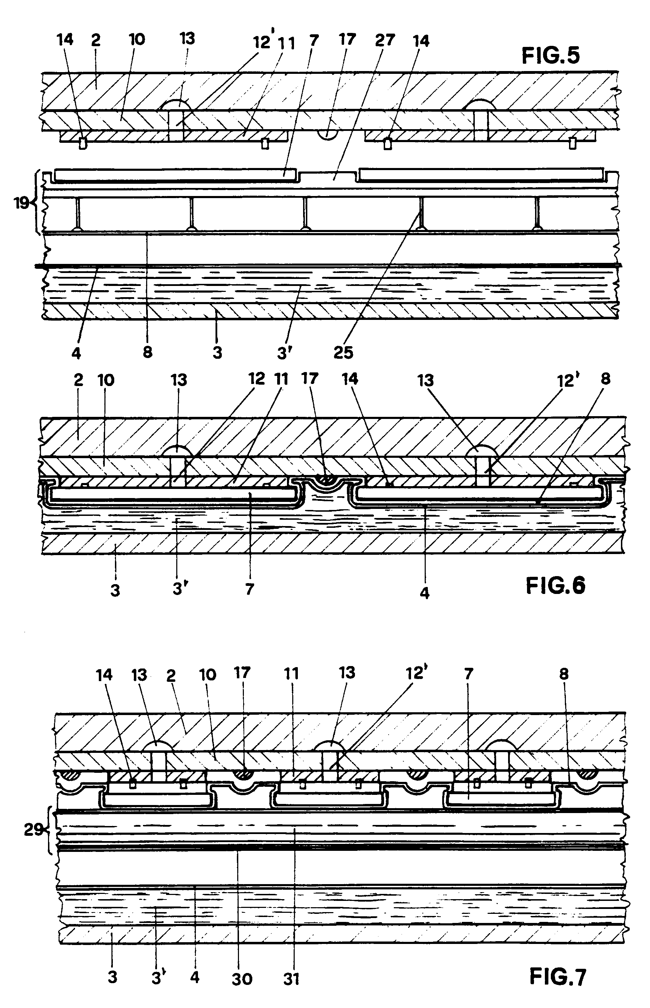

- Figure 5: is an enlarged partial vertical section through the apparatus on the line V-V of Figure 1 during the loading of the panels to be covered, and of the cover sheet;
- Figure 6: is the same view as Figure 5 but during the pressing stage; and
- Figure 7: is an enlarged partial vertical section on the line VII-VII of Figure 1 taken during the extraction of the panels covered by the press.

As can be seen from the figures the apparatus according to the invention can be applied to a traditional membrane press, indicated overall by 1 and comprising a fixed upper platen 2 and a lower tray 3 containing a liquid 3' such as oil or water and closed upperly by a rubber membrane 4. The tray 3, which is provided with a traditional system for heating the liquid, not shown on the drawings for simplicity of representation, is supported by hydraulic cylinder-piston units 5 for its vertical movement alon guide columns 6 between lower position corresponding to the rest position, in which the press 1 is open for introduction of the panels 7 to be covered and the sheets 8 of thermodeformable laminate, and an upper position corresponding to the working position, in which said membrane 4 has been brought close to the upper platen 2 to press thereagainst the interposed panels 7 and laminate sheet 8.

To the platen 2 there are applied a plurality of downwardly facing mushroom appendixes 9 to which a frame 10 of spacers 11 can be removably attached, as will be apparent hereinafter.

The frame 10 consists substantially of a preferably wooden plate of dimensions substantially corresponding to those of the press platen 2, and to which the spacers 11 corresponding to the panels 7 to be covered are applied. For production rationalization reasons it is preferably for the various working cycles to be carried out on identical panels and hence with identical spacers, with the result that the number of frames 10 provided is equal to the number of types of panels to be covered, identical spacers 11 being applied to each frame in a number and arrangement compatible with the dimensions of the frame 10 (and thus of the fixed platen 2 of the press) and with the dimensions and shape of each panel.

Each spacer 11 comprises at least one hole 12 which traverses it through its entire thickness in a position corresponding with a further through hole 12' provided in the frame 10 and opening into a series of channels 13 provided in the platen 2 and connected to a suction system, not shown on the drawings.

Along, but at a certain distance from, the edge of each spacer 11 there is provided a continuous seal gasket 14, which slightly projects from the spacer surface.

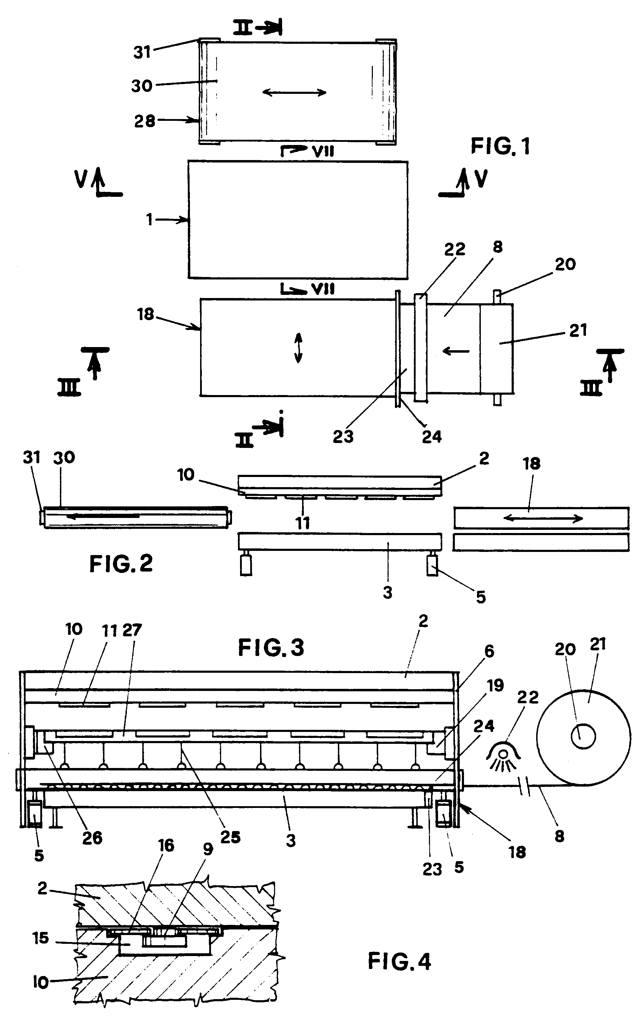

For attaching the frame 10 to the platen 2 (see Figure 4) there are provided in the frame 10 recesses 15 which are each covered with a metal plate 16 comprising a slot having a width which varies from a maximum which just exceeds the head of the mushroom appendices 9, to a minimum which just exceeds the shank of said appendices. The plates 16 are provided in the frame 10 to correspond with the positions occupied by the mushroom appendices 9 in the fixed platen 2.

Retainers 17 are also applied to the frame 10. These consist of elongate blocks of wood fixed to the frame 10 at a short distance from the spacers 11. They can be applied to correspond with the four vertices of each spacer, and in this case they are of L-shape, or they can be applied along the outer edge of just the outer spacers, in which case they can be straight, except for those at the corners, which are of L-shape.

The apparatus according to the invention also comprises a feeder for feeding both the panels 7 to be covered and the sheets 8 of thermodeformable plastic laminate for the covering.

This feeder comprises a fixed framework 18 positioned to the side of the press 1, a feed line for the plastic laminate sheets 8 and a feed conveyor 19 mobile away from and towards the press 1. The plan dimensions of said conveyor 19 substantially correspond to those of said press 1.

In its essential elements, the feed line for the sheets 8 comprises:
- fixed to the framework 18, a pair of supports 20 for a reel 21 of thermodeformable plastic web pretreated with suitable adhesive;
- a radiation heater 22 for removing the curvature from said web before it reaches the feed conveyor 19; and
- a transverse web cutter 23 comprising a chain taut transversely on the unwinding web, and a pair of blades 24 fixed at equidistant points thereon.

The conveyor 19 is provided on the prolongation of this feed line and is supported by the framework 18. It consists substantially of a metal frame slidable substantially along guides fixed to the framework 18 and to the press 1, between a position in which it is totally contained within said framework and a position in which it is totally contained within said press 1.

The frame of the conveyor 19 is provided with a plurality of suckers 25 connected to a suction circuit, and is mobile in a vertical direction between a lower position in which it grips a sheet of thermodeformable laminate 8 from the feed line downstream of the cutter 23, and an upper position raised above said feed line.

These vertical movements are obtained by any conventional means, preferably pneumatic or electrical.

The top of the frame of the conveyor 19 is provided with supports 26 for a jig 27, consisting essentially of a blockboard panel in which seats are provided for the panels 7 to be covered.

The apparatus according to the invention also comprises an extraction line for the covered panels. In the illustrated embodiment this extraction line comprises a framework 28 situated on the opposite side of the press 1 to the framework 18. As in the case of the framework 18, the framework 28 is also provided with a pair of horizontal guides along which a carriage 29 slides between a position in which it is totally housed within the open press 1, and a position totally outside it.

In the carriage 29 there is mounted a conveyor belt 30, mobile in a direction perpendicular to the direction of movement of the carriage and extending between two end rollers 31.

The operation of the apparatus according to the invention is as follows:

The operation of the apparatus according to the invention is as follows:
after defining the type of panels 7 to be covered, the corresponding spacer frame 10 is mounted. For this purpose, the frame 10 is firstly placed on the support 26 of the conveyor 19 and is transferred by this into the press 1, to a position exactly lying below its upper fixed platen 2. The surface of the conveyor 19 is then raised until the mushroom appendices 9 of the platen 2 engage in the corresponding metal plates 16 of the frame 10. The frame 10 is then moved horizontally relative to the platen 2 to cause the appendices 9 to bayonet-engage the slot of the plates 16 to thus securely attach the frame 10 to the platen 2.

This horizontal movement can be effected either by the conveyor 19 itself or, preferably, by screw pushers applied to the platen 2 and acting on the edge of the frame 10. These pushers are not shown on the drawings for simplicity of representation. Their purpose is also to set the position of said frame with maximum precision, for the reasons given hereinafter.

After the frame 10 has been correctly secured in position, the two components should be sealed together to enable the suction created in the channels 13 of the platen 2 to be transmitted to the holes 12 of each spacer 11. This is done by sealing the separation line between the two contacting edges, for example with adhesive tape.

That jig 27 corresponding to the particular frame 10, ie the jig comprising seats for panels 7 lying exactly below the spacers 11 when the conveyor 19 is in its end-of-travel position within the press, is then positioned on the supports 26 of the conveyor 19.

The facility for effecting even minimum displacements of the frame 10 makes it possible in all cases to obtain precise relative positioning.

After carrying out this preparatory work and heating the liquid 3' contained in the tray 3 to the required temperature, the press is ready for operation. A length of thermoplastic material corresponding to the length of the frame 10 is firstly unwound from the reel 21 and the heater 22 is simultaneously powered, so as to at least approximately straighten it. The cutter 23 is then operated to separate from the material web the sheet 8 which is already lying below the suckers 25. One or more operators simultaneously load a panel 7 to be covered into each seat of the jig 27.

On termination of this stage a command is fed to cause the suckers 25 to descend onto the sheet 8 and open their connection to the suction circuit, so as to grip the sheet 8 and raise it. The conveyor 19 is then advanced until it reaches its position within the press 1. Having reached this, the suction effect of the suckers is interrupted with the result that they allow the sheet 8 to fall onto the membrane 4, after which the jig 27 is raised until each panel 7 adheres to the spacer 11 of frame 10.

Because of the correct relative positioning between the frame 10 and the jig 27, each panel 7 is perfectly centered against the overlying spacer 11, and can be secured to it by suction.

After the conveyor 19 has been again lowered and has left the press 1, the tray 3 is raised until the membrane 4 presses the sheet 8 with high pressure against the panels 7 and retainers 17, so implementing the covering operation.

On termination of the pressing stage, the tray 3 is made to descend but without interupting the suction effect on the spacers 11, which in this manner continue to retain the already covered panels 7.

After the descent of the tray 3, the press 1 receives the carriage 29, onto which the panels 7 retained together by the single sheet 8 fall following interruption of the suction on the spacers 11.

Practically it may occur that the membrane 4 can lacerate by wear and also due to the probably break of the laminate sheet 8 during its deformation. In this case, in order to avoid that the liquid 3', which unavoidably enters the suction channels 13, can damage the vacuum pump, in the suction circuit there are provided filters or like to capture this liquid.

When the carriage 29 has left the press 1, the conveyor belt 30 is operated to transfer the covered panels to the other separation and/or finishing stations, and the system is ready to repeat the operating cycle on a new series of panels 7 which in the meanwhile have been arranged on the feed line.

From the aforegoing it is apparent that the apparatus according to the invention enables wooden panels to be covered with thermodeformable plastic material at a high production rate, with considerable operational precision and thus with a very low percentage of rejects, and with a working cycle which can be highly automated, with the only exception of the positioning of the panels 7 in the corresponding seats in the jig 27, an operation however which can be effected by one person.

## Claims

1. An apparatus for covering a surface and the edges of panels of wooden material with a sheet of thermodeformable plastic material, of the type for application to a press (1) with a lower heated bed of elastically yieldable material and a rigid upper platen (2), said apparatus comprising a frame (10) removably attachable to the upper platen (2), a plurality of spacers (11) applied to said frame (10), each spacer (11) being provided with at least one hole (12) connecting its lower surface to a suction circuit (13) connected to said frame (10), characterised in that it comprises:
- seal means (14) surrounding each hole of each spacer (11);
- a conveyor (19) for conveying thermodeformable plastic laminate sheets (8) from a position outside said press (1) to a position within it, said conveyor being provided with means (25) for picking up and discharging said sheets (8);
- a positioning jig (27) for a plurality of panels (7) to be covered, and provided with seats for said panels in correspondance of the position of said spacers (11) on said frame (10); and
- means (19) for transferring said positioning jig (27) from the outside to the inside of the press (1) and for raising it when inside the press, in order to bring the panels (7), located in their respective seats, into contact with the corresponding spacers (11).

2. An apparatus as claimed in claim 1, characterised in that the attachment between the upper platen (2) of the press (1) and the frame (10) containing the spacers (11) is obtained by mushroom appendices (9) and slotted plates (16) provided in the frame and bayonet-engageable with each other.

3. An apparatus as claimed in claim 1, characterised in that each spacer (11) comprises at least one through hole (12) connected to a suction network (13) via the frame (10).

4. An apparatus as claimed in claim 1, characterised in that the seal means surrounding said hole (12) consist of a continuous perimetral gasket (14) partially projecting from the lower surface of the corresponding spacer (11).

5. An apparatus as claimed in claim 1, characterised in that the retention elements (17) are applied to the frame (10) at least in positions corresponding with the outer edge of the spacers (11).

6. An apparatus as claimed in claim 1, characterised in that there are associated with the conveyor (19) an unwinder for unwinding said sheets (8) from a reel (21) and a cutter (23) for separating the sheets (8) from the web unwound from said reel.

7. An apparatus as claimed in claim 1, characterised in that a heater (22) is interposed between the reel (21) and the cutter (23) to remove curvature from the web unwound from said reel.

8. An apparatus as claimed in claim 6, characterised in that the cutter (23) consists substantially of an endless chain extending tautly transversely to the web of thermodeformable material unwound from said reel (21), and at least one blade (24) applied to said chain.

9. An apparatus as claimed in claim 1, characterised by comprising a framework (18) to the side of the press (1) and a carriage (19) mobile between a position within and a position outside said press (1), said carriage being provided lowerly with a plurality of suckers (25) connected to a suction network for picking up and transferring each sheet from the framework (18) to the lower bed (3) of the press, and a plurality of supports (26) for said jig (27).

10. An apparatus as claimed in claim 9, characterised in that members for vertically moving said suckers (25) and said supports (26) are associated with the carriage (19).

11. An apparatus as claimed in claim 1, characterised by comprising a member (29) for extracting from the press (1) the panels (7) covered with the sheet (8) on termination of the covering stage.

12. An apparatus as claimed in claim 11, characterised in that the extractor member (29) comprises a framework (28) located to the side of the press (1) and a carriage (29) mobile between a position outside and a position within said press and provided with a conveyor belt (30) for transferring the total covered panels (7) to the subsequent working stages.

## Patentansprüche

1. Apparat zur Beschichtung einer Oberfläche und der Kanten von Platten aus Holzmaterial mit einer Folie aus wärmeverformbarem Kunststoffmaterial des Typs zur Verwendung bei einer Presse (1) mit einem unteren erwärmten Bett aus elastisch nachgiebigem Material und einer starren oberen Platte (2), wobei der Apparat einen Rahmen (10), der lösbar an der oberen Platte (2) befestigbar ist, und eine Vielzahl von Abstandshaltern (11), die an dem besagten Rahmen (10) angebracht sind, umfaßt, wobei jeder Abstandshalter (11) mit wenigstens einem Loch (12) versehen ist, welches seine untere Oberfläche mit einem Saugkreislauf (13) verbindet, der mit dem besagten Rahmen (10) verbunden ist,
dadurch gekennzeichnet, daß er umfaßt
- eine Dichtungseinrichtung (14), welche jedes Loch jedes Abstandshalters (11) umgibt;
- ein Fördermittel (19) zum Fördern wärmeverformbarer Kunststofflaminatfolien (8) von einer Position außerhalb der besagten Presse (1) zu einer Position innerhalb derselben, wobei die Fördermittel mit einer Einrichtung (25) zur Aufnahme und zur Abgabe der besagten Folien (8) versehen sind;
- eine Positioniervorrichtung (27) für eine Vielzahl von zu beschichtenden Platten (7), welche mit Aufnahmen für die besagten Platten entsprechend der Position zu den besagten Abstandshaltern (11) auf dem besagten Rahmen (10) versehen ist; und
- eine Einrichtung (19) zum Transport der besagten Positioniervorrichtung (27) von außen zum Inneren der Presse (1) und zum Hochfahren derselben, wenn sie sich innerhalb der Presse befindet, um die Platten (7), die in ihren entsprechenden Aufnahmen angeordnet sind, in Kontakt mit den entsprechenden Abstandshaltern (11) zu bringen.

2. Apparat nach Anspruch 1, dadurch gekennzeichnet, daß die Befestigung zwischen der oberen Platte (2) der Presse (1) und dem Rahmen (10), der die Abstandshalter (11) enthält, durch Pilzfortsätze (9) und durch in dem Rahmen vorgesehene geschlitzte Platten (16) erhalten wird, welche bajonettartig ineinandergreifen.

3. Apparat nach Anspruch 1, dadurch gekennzeichnet, daß jeder Abstandshalter (11) wenigstens ein durchgehendes Loch (12) aufweist, welches an ein Saugnetz (13) über den Rahmen (10) angeschlossen ist.

4. Apparat nach Anspruch 1, dadurch gekennzeichnet, daß die Dichtungseinrichtung, welche das besagte Loch (12) umgibt, aus einer kontinuierlichen Umfangsdichtung (17) besteht, welche teilweise von der unteren Oberfläche des entsprechenden Abstandshalters (11) wegragt.

5. Apparat nach Anspruch 1, dadurch gekennzeichnet, daß die Halteelemente (17) an dem Rahmen (10) wenigstens in Positionen angebracht sind, welche den äußeren Kanten der Abstandshalter (11) entsprechen.

6. Apparat nach Anspruch 1, dadurch gekennzeichnet, daß den Fördermittel (19) ein Abwickler zum Abwickeln der besagten Folien (8) von einer Spule (21) und eine Schneideinrichtung (23) zum Abtrennen der Folien (8) von der Bahn, welche von der besagten Spule abgewickelt wird, zugeordnet sind.

7. Apparat nach Anspruch 1, dadurch gekennzeichnet, daß eine Heizeinrichtung (22) zwischen der Spule (21) und der Schneideinrichtung (23) angeordnet ist, um eine Wölbung von der Bahn, welche von der besagten Spule abgewickelt wird, zu entfernen.

8. Apparat nach Anspruch 6, dadurch gekennzeichnet, daß die Schneideinrichtung (23) im wesentlichen aus einer endlosen Kette besteht, welche sich straff quer zu der Bahn aus wärmeverformbarem Material erstreckt, welches von der besagten Spule (21) abgewickelt wird, sowie aus wenigstens einem Messer (24), das an der besagten Kette angebracht ist.

9. Apparat nach Anspruch 1, gekennzeichnet durch einen Rahmen (18) auf der Seite der Presse (1) und einen Schlitten (19), der zwischen einer Position innerhalb und einer Position außerhalb der besagten Presse (1) bewegbar ist, wobei der Schlitten unten mit einer Vielzahl von Saugern (25) versehen ist, die an ein Saugnetz angeschlossen sind, um jede Folie aufzunehmen und von dem Rahmen (18) zu dem unteren Bett (3) der Presse zu befördern, sowie eine Vielzahl von Trägern (26) für die besagte Positioniervorrichtung (27).

10. Apparat nach Anspruch 9, dadurch gekennzeichnet, daß Glieder zum senkrechten Bewegen der besagten Sauger (25) und der besagten Träger (26) dem Schlitten (19) zugeordnet sind.

11. Apparat nach Anspruch 1, gekennzeichnet durch ein Glied (29) zur Entnahme der mit der Folie (8) beschichteten Platten (7) nach Beendigung der Beschichtungsstufe von der Presse (1).

12. Apparat nach Anspruch 11, dadurch gekennzeichnet, daß das Entnahmeglied (29) einen Rahmen (28) umfaßt, der auf der Seite der Presse (1) angeordnet ist, sowie einen Schlitten (29), der zwischen einer Position außerhalb und einer Position innerhalb der besagten Presse bewegbar ist und mit einem Förderband (30) zum Transport der vollständig beschichteten Platten (7) zu den nachfolgenden Bearbeitungsstufen versehen ist.

## Revendications

1. Appareil de recouvrement d'une surface et des bords de panneaux en bois par une feuille de matière plastique thermodéformable, du type utilisé sur une presse (1) comportant un lit inférieur chauffé en un matériau élastiquement déformable et un plateau supérieur rigide (2), ledit appareil comportant un cadre (10) pouvant être fixé de manière libérable sur le plateau supérieur (2), plusieurs écarteurs (11) étant installés sur ledit cadre (10), chaque écarteur (11) étant doté d'au moins un trou (12) reliant en sa surface inférieure à un circuit de succion (13) relié audit cadre (10),
caractérisé en ce qu'il comporte:
- des moyens d'étanchéité (14) entourant chaque trou de chaque écarteur (11);
- un transporteur (19) pour transférer des feuilles en lamifié plastique thermodéformable (8) d'une position située à l'extérieur de ladite presse (1) jusqu'en une position située à l'intérieur de celle-ci, ledit transporteur étant doté de moyens (25) de saisie et de déchargement desdites feuilles (8);
- un appui de positionnement (27) de plusieurs panneaux (7) à recouvrir, et doté de logements pour lesdits panneaux, correspondant à la position desdits écarteurs (11) sur ledit cadre (10); et
- des moyens (19) pour transférer ledit appui de positionnement (27) depuis l'extérieur jusque dans l'intérieur de la presse (1), et pour le relever lorsqu'il se trouve à l'intérieur de la presse, pour amener les panneaux (7) situés dans leur logement respectif en contact avec les écarteurs (11) correspondants.

2. Appareil selon la revendication 1, caractérisé en ce que la fixation entre le plateau supérieur (2) de la presse (1) et le cadre (10) contenant les écarteurs (11) est obtenue par des appendices (9) en forme de champignon et des plateaux fendus (16) prévus dans le cadre, les premiers pouvant s'engager à baïonnette avec les seconds.

3. Appareil selon la revendication 1, caractérisé en ce que chaque écarteur (11) comporte au moins un trou traversant (12) relié à un réseau de succion (13) par l'intermédiaire du cadre (10).

4. Appareil selon la revendication 1, caractérisé en ce que le moyen d'étanchéité entourant ledit trou (12) est constitué d'un joint périphérique continu (14) débordant partiellement de la surface inférieure de l'écarteur (11) correspondant.

5. Appareil selon la revendication 1, caractérisé en ce que les éléments d'arrêts (17) sont installés sur le cadre (10) au moins dans les positions correspondant au bord extérieur des écarteurs (11).

6. Appareil selon la revendication 1, caractérisé en ce qu'au transporteur (19) sont associés un dérouleur, pour dérouler lesdites feuilles (8) d'une bobine (21), et un couteau (23) pour séparer les feuilles (8) de la feuille déroulée de ladite bobine.

7. Appareil selon la revendication 1, caractérisé en ce qu'un réchauffeur (22) est intercalé entre la bobine (21) et le couteau (23), pour éliminer la courbure de la feuille déroulée de ladite bobine.

8. Appareil selon la revendication 6, caractérisé en ce que le couteau (23) est essentiellement constitué d'une chaîne sans fin tendue transversalement par rapport à la feuille de matériau thermodéformable déroulée de ladite bobine (21), et d'au moins une lame (24) installée sur ladite chaîne.

9. Appareil selon la revendication 1, caractérisé en ce qu'il comporte un châssis (18) placé sur le côté de la presse (1) et un chariot (19) pouvant se déplacer entre une position située à l'intérieur et une position située à l'extérieur de ladite presse (1), ledit chariot étant doté dans le bas de plusieurs ventouses (25) reliées à un réseau de succion, pour saisir et transférer chaque feuille depuis le châssis (18) jusqu'au lit inférieur (3) de la presse, et plusieurs supports (26) pour ledit appui (27).

10. Appareil selon la revendication 9, caractérisé en ce que des organes pour déplacer verticalement lesdites ventouses (25) et lesdits supports (26) sont associés au chariot (19).

11. Appareil selon la revendication 1, caractérisé en ce qu'il comporte un organe (29) pour extraire de la presse (1) les panneaux (7) recouverts de la feuille (8) lorsque l'étape de recouvrement est terminée.

12. Appareil selon la revendication 11, caractérisé en ce que l'organe d'extraction (29) comporte un châssis (28) situé sur le côté de la presse (1), et un chariot (29) pouvant être déplacé entre une position située à l'extérieur et une position située à l'intérieur de ladite presse, et doté d'une bande transporteuse (30) pour transférer la totalité des panneaux (7) recouverts vers les étapes de traitement ultérieures.
